# EUROPÄISCHE PATENTSCHRIFT

(11) **EP 3 804 965 B1**
(45) Veröffentlichungstag und Bekanntmachung des Hinweises auf die Patenterteilung: **17.09.2025**
(21) Anmeldenummer: 19202442.0
(22) Anmeldetag: 10.10.2019
(51) Int. Cl.: B29C 65/20, B29C 65/14, B29C 65/78, B29K 101/12

(54) **VERFAHREN UND VORRICHTUNG ZUR HERSTELLUNG EINER STUMPFSCHWEISSVERBINDUNG**
METHOD AND DEVICE FOR MANUFACTURING A BUTT WELDED JOINT
PROCÉDÉ ET DISPOSITIF DE FABRICATION D'UN RACCORDEMENT SOUDÉ BOUT À BOUT

(43) Veröffentlichungstag der Anmeldung: 14.04.2021
(73) Patentinhaber: Hürner Schweisstechnik GmbH, 35325 Mücke (DE)
(72) Erfinder: LENZ, Michael, 35325 Mücke (DE); KRAUS, Florian, 35325 Mücke (DE); EARLY, Richard, 35447 Reiskirchen (DE)
(74) Vertreter: advotec.

(56) Entgegenhaltungen:
- CN-A- 107 031 057
- CN-U- 204 585 880
- DE-A1- 2 234 976

## Beschreibung

Die vorliegende Erfindung betrifft ein Verfahren zur Herstellung einer Stumpfschweißverbindung zwischen zwei jeweils von einer Greifeinrichtung aufgenommenen Rohrsegmenten eines Rohres aus einem schweißbaren Kunststoffmaterial, wobei zur Ausbildung von Schweißkontaktflächen Rohrendquerschnitte der Rohrsegmente mit einer Werkzeugeinrichtung spanend bearbeitet werden, die Schweißkontaktflächen mittels einer Heizeinrichtung aufgeschmolzen und nachfolgend die Schweißkontaktflächen zur Ausbildung einer die Rohrsegmente in einer Fügeebene miteinander verbindenden Stumpfschweißnaht mit einem Fügedruck gegeneinander gepresst werden. Darüber hinaus betrifft die Erfindung eine Vorrichtung zur Durchführung des Verfahrens.

Aus der DE 10 2012 207 098 A1 sind ein Verfahren sowie eine Vorrichtung zur Herstellung einer Stumpfschweißverbindung zwischen zwei jeweils von einer Greifeinrichtung aufgenommenen Rohrsegmenten eines Kunststoffrohres bekannt, bei dem vor Anordnung in der Vorrichtung durch Trennschnitte hergestellte Rohrsegmente jeweils von einer Greifeinrichtung aufgenommen werden und einander gegenüberliegend angeordnete Rohrendquerschnitte der Rohrsegmente einander nachfolgend mit einer Werkzeugeinrichtung spanend bearbeitet werden, um Schweißkontaktflächen auszubilden. Zum Einsatz der Werkzeugeinrichtung wird diese in einen in der Vorrichtung zwischen den Schweißkontaktflächen ausgebildeten Zwischenraum eingefahren, um anschließend vermittels einer von den Greifeinrichtungen ausgeführten axialen Zustellbewegung der Rohrsegmente die Rohrendquerschnitte zu bearbeiten. Nach Ausführung der spanenden Bearbeitung zur Herstellung der Schweißkontaktflächen wird die Werkzeugeinrichtung gegen eine Kontaktheizeinrichtung ausgetauscht, die, wie zuvor die Werkzeugeinrichtung, in den zwischen den Rohrsegmenten ausgebildeten Zwischenraum eingefahren wird.

Zur Herstellung der Stumpfschweißnaht werden schließlich die mittels der Kontaktheizeinrichtung aufgeschmolzenen Schweißkontaktflächen nach Entfernung der Kontaktheizeinrichtung aus dem zwischen den Rohrsegmenten ausgebildeten Zwischenraum mit einem Fügedruck gegeneinander gepresst. Die Entfernung der fertiggestellten Rohrverbindung erfolgt dann anschließend entsprechend der zuvor erfolgten Bestückung der Vorrichtung mit den Rohrsegmenten manuell.

Im Einsatz der bekannten Vorrichtung hat es sich insbesondere als nachteilig herausgestellt, dass die Vorbereitung der Rohrsegmente als Voraussetzung für die Herstellung der Stumpfschweißverbindung eine Vielzahl von Fertigungs- bzw. Handhabungsschritten erfordert, die insbesondere im Anlagenbau im Zusammenhang mit den häufig komplexen, eine Vielzahl von Rohrverbindungen aufweisenden Rohrleitungssystemen zu entsprechend langen Bauzeiten führen.

Die CN 107031057 beschreibt eine Verbundrohrschweißvorrichtung mit Schweiß-, Hobel- und Winkeleinstellungseinrichtungen, sowie einer Heizplatte zum Verbinden von Kunststoffrohren. Zwei zu schweißende Rohrsegmente werden dabei jeweils von einer Greifeinrichtung geklemmt. Eine spanende Bearbeitung und ein Verschweißen erfolgen hier mittels einer Relativbewegung der Hobeleinrichtung und der Heizplatte gegenüber des Rohres bzw. der Rohrsegmente.

Die DE 2234976 zeigt eine Vorrichtung zum Verschweißen von Kunststoffrohren, umfassend zwei Greifeinrichtungen zum Klemmen der Kunststoffrohre, sowie zwei Schlitten, auf denen sich je eine Greifeinrichtung befindet. Über einen Hebel lassen sich die auf einer Stange befindlichen Schlitten und damit die Greifeinrichtungen relativ zueinander verschieben. Weiterhin lassen sich die Greifeinrichtungen relativ zu den Schlitten verdrehen. Ein Abtrennen der Kunststoffrohre erfolgt senkrecht zur Stange über eine Relativbewegung einer Werkzeugeinrichtung.

Die CN 204 585 880 U offenbart eine Rohranschlussvorrichtung zum Verbinden von Kunststoffrohren mittels einer Werkzeugeinrichtung und Greifeinrichtungen. Die Kunststoffrohre werden jeweils mittels der Greifeinrichtungen geklemmt und können mit Hilfe einer drehbaren Mitteleinstellscheibe relativ zueinander gedreht werden. Die Werkzeugeinrichtung wird relativ zu Rohrsegmenten bewegt.

Der vorliegenden Erfindung liegt daher die Aufgabe zugrunde, ein Verfahren sowie eine Vorrichtung vorzuschlagen, die die Herstellung von Rohrverbindungen zwischen Rohrsegmenten von Kunststoffrohren im Sinne einer Reduzierung der Fertigungs- und Handhabungsschritte vereinfacht und somit entsprechend kürzere Bauzeiten im Anlagenbau ermöglicht.

Zur Lösung dieser Aufgabe weist das erfindungsgemäße Verfahren die Merkmale des Anspruchs 1 auf.

Entsprechend dem erfindungsgemäßen Verfahren ist die Werkzeugeinrichtung zur spanenden Bearbeitung der Schweißkontaktflächen in einer Trennebene stationär angeordnet und ein Trennschnitt zur Ausbildung der Rohrsegmente wird mittels einer von den Greifeinrichtungen ausgeführten Relativbewegung des Rohres gegenüber dem Werkzeug in der Trennebene ausgeführt, wobei der Trennschnitt gleichzeitig zur Ausbildung der Schweißkontaktflächen dient.

Erfindungsgemäß dient also die Werkzeugeinrichtung, welche durch spanende Bearbeitung der Rohrendquerschnitte die Schweißkontaktflächen herstellt, gleichzeitig zur Ausbildung der Rohrsegmente mittels eines das Rohr durchtrennenden Trennschnitts. Dabei ermöglicht die von den Greifeinrichtungen ausgeführte Relativbewegung des Rohres gegenüber der Werkzeugeinrichtung unterschiedliche Orientierungen der Trennebene gegenüber einer Rohrlängsachse, so dass nicht nur Trennschnitte in einer in einem Winkel von 90° zur Längsachse angeordneten Trennebene sondern auch beliebig andere Trennwinkel einstellbar sind, ohne dass hiermit eine Änderung der Aufnahme des Rohres in den Greifeinrichtungen notwendig wäre.

Als besonders vorteilhaft erweist es sich auch, dass die stationäre Anordnung der Werkzeugeinrichtung zur spanenden Bearbeitung der Schweißkontaktflächen den Einsatz eines insbesondere als Fingerfräsers ausgebildeten Fräswerkzeugs zur gleichzeitigen Erzeugung der Rohrsegmente durch Trennung des Rohres in einer Trennebene und die Oberflächenbearbeitung der Rohrendquerschnitte zur Ausbildung der Schweißkontaktflächen in einem Arbeitsgang ermöglicht.

Bei einer bevorzugten Ausführungsform werden die Greifeinrichtungen zur Ausführung der Relativbewegung jeweils von einer Handhabungseinrichtung in einer zur Trennebene parallelen Bewegungsebene auf einer kreisförmigen Bewegungsbahn geführt. Hierbei führt die Längsachse des Rohres während der Ausführung des Trennschnitts in der Trennebene eine Taumelbewegung aus, bei der der Taumelwinkel der Neigung der Trennebene gegenüber der Normalebene des Rohres entspricht. Damit lassen sich Trennschnitte herstellen, die mit einem nachfolgenden Fügevorgang der um 180° zueinander verdrehten Rohrsegmente Rohrverbindungen mit einem beliebigen Rohrwinkel zwischen 0° und 90° ermöglichen, ohne dass hierzu eine Änderung der Aufnahme der Rohrsegmente in den Greifeinrichtungen notwendig wäre.

Besonders vorteilhaft ist es, wenn das Rohr vor Ausführung des Trennschnitts von einer Greifeinrichtung an einem Rohrende erfasst und aus einer Bereitstellungsposition in eine der Werkzeugeinrichtung benachbarte Bearbeitungsausgangsposition überführt wird, in der das zweite Rohrende von der zweiten Greifeinrichtung erfasst und das Rohr von beiden Greifeinrichtungen zur Ausführung des Trennschnitts einem Schneidwerkzeug der Werkzeugeinrichtung zugestellt wird.

Somit kann nicht nur die Handhabung des Rohres gegenüber der Werkzeugeinrichtung mittels der Greifeinrichtungen durchgeführt werden. Vielmehr kann auch eine der Greifeinrichtungen als Transfereinrichtung zur Entnahme des Rohres aus einer in Bereitstellungsposition angeordneten Magazineinrichtung in eine Bearbeitungsausgangsposition verwendet werden.

Besonders vorteilhaft ist es, wenn nach Ausführung des Trennschnitts die Rohrsegmente mittels der Greifeinrichtungen mit ihren Schweißkontaktflächen jeweils gegen eine Heizfläche der zwischen den Schweißkontaktflächen angeordneten Heizeinrichtung verfahren werden.

Im Falle einer bevorzugten Ausbildung der Heizeinrichtung als Kontaktheizeinrichtung werden die Schweißkontaktflächen bis zur Anlage gegen die Heizflächen verfahren. In dem Fall, dass die Heizeinrichtung etwa als Strahlungsheizeinrichtung ausgebildet ist, können die Schweißkontaktflächen mit Abstand zu den Heizflächen positioniert werden.

Wie bereits im Zusammenhang mit der stationär angeordneten Werkzeugeinrichtung als vorteilhaft herausgestellt, erweist sich auch die Zuführung der mit den Schweißkontaktflächen versehenen Rohrsegmente zu einer stationär angeordneten Heizeinrichtung als vorteilhaft, da somit die Ausführung der Heizeinrichtung allein hinsichtlich ihrer Effektivität, also insbesondere hinsichtlich der erreichbaren Aufheizzeit erfolgen kann, ohne auf die Handhabbarkeit bzw. die Positionierbarkeit der Heizeinrichtung Rücksicht nehmen zu müssen.

Wenn nach erfolgter Aufheizung der Schweißkontaktflächen die Schweißkontaktflächen einander gegenüberliegend und parallel zueinander angeordnet und durch eine von zumindest einer Greifeinrichtung ausgeführten Zustellbewegung zur Ausbildung einer stoffschlüssigen Verbindung in einer Führungsebene gegeneinander verfahren werden, ist es möglich, die Relativposition der Fügeebene gegenüber der Trennebene und/oder der Heizeinrichtung frei zu wählen.

Vorzugsweise erfolgt die Aufheizung der Schweißkontaktflächen mittels einer stationär benachbart der Werkzeugeinrichtung angeordneten Heizeinrichtung und das Fügen der Rohrsegmente in einer zur Heizeinrichtung benachbarten Fügeposition, so dass die von den Greifeinrichtungen mit den Rohrsegmenten auszuführenden Wege minimiert werden können.

Besonders vorteilhaft ist es auch, wenn die spanende Bearbeitung der Rohrendquerschnitte zur Ausbildung der Schweißkontaktflächen, die Aufheizung der Schweißkontaktflächen und das Fügen der Schweißkontaktflächen in einer gemeinsamen zwischen den Handhabungseinrichtungen angeordneten Bearbeitungsebene erfolgt.

Die erfindungsgemäße Vorrichtung weist zur Lösung der Aufgabe die Merkmale des Anspruchs 8 auf.

Bei der erfindungsgemäßen Vorrichtung zur Herstellung einer Stumpfschweißverbindung zwischen zwei Rohrsegmenten ist die Werkzeugeinrichtung stationär angeordnet, und die Greifeinrichtungen zur Handhabung der Rohrsegmente sind gegenüber der Werkzeugeinrichtung unabhängig voneinander in Richtung der Raumachsen bewegbar.

Besonders vorteilhaft ist es, wenn die Heizeinrichtung stationär und benachbart zur Werkzeugeinrichtung angeordnet ist.

Vorzugsweise sind die Greifeinrichtungen jeweils an einer mehrere Bewegungsachsen aufweisenden Handhabungseinrichtung angeordnet, wobei es besonders bevorzugt ist, wenn die Handhabungseinrichtung als Roboter mit zumindest fünf Achsen ausgebildet sind, wobei insbesondere zur Ausführung einer Greifbewegung die Greifeinrichtungen eine sechste Achse aufweisen. Besonders bevorzugt ist die Ausbildung der Handhabungseinrichtung als Roboter mit sechs Achsen.

Wenn die Werkzeugeinrichtung und die Heizeinrichtung in einer gemeinsamen Bearbeitungsebene zwischen den jeweils stationär angeordneten Handhabungseinrichtungen angeordnet sind, ist es möglich, den Bewegungsraum der Handhabungseinrichtungen möglichst klein auszugestalten, so dass bereits Roboter mit relativ geringen Reichweiten eine Ausführung des erfindungsgemäßen Verfahrens ermöglichen.

Die Heizeinrichtung kann besonders vorteilhaft als Kontaktheizeinrichtung oder Strahlungsheizeinrichtung ausgebildet sein.

Nachfolgend wird eine bevorzugte Ausführungsform des Verfahrens mit Darstellung einer bevorzugten Ausführungsform einer Vorrichtung zur Ausführung des Verfahrens anhand der Zeichnungen näher erläutert.

Es zeigen:
- **Fig. 1**: eine Vorrichtung zur Herstellung einer Stumpfschweißverbindung vor der Entnahme eines Rohres aus einer Magazineinrichtung;
- **Fig. 2**: die in **Fig. 1** dargestellte Vorrichtung nach Entnahme des Rohres aus der Magazineinrichtung;
- **Fig. 3**: das von zwei Greifeinrichtungen der Vorrichtung in einer Bearbeitungsposition an einer Werkzeugeinrichtung positionierte Rohr;
- **Fig. 4 - 7**: die spanende Bearbeitung des Rohres zur Ausbildung von Rohrsegmenten;
- **Fig. 8**: das Aufheizen von an den Rohrsegmenten ausgebildeten Schweißkontaktflächen an einer Kontaktheizeinrichtung;
- **Fig. 9**: den Fügevorgang zwischen den Schweißkontaktflächen zur Ausbildung einer Rohrverbindung;
- **Fig. 10**: die Handhabung der fertiggestellten Rohrverbindung;
- **Fig. 11**: ein weiteres Ausführungsbeispiel einer Rohrverbindung.

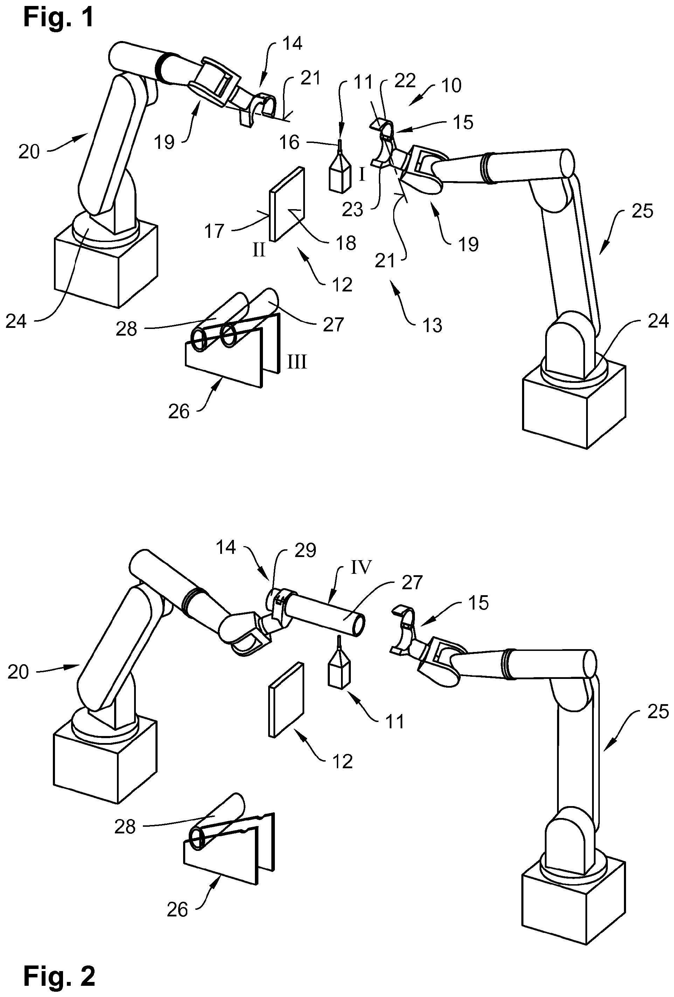

**Fig. 1** zeigt eine Ausführungsform einer Stumpfschweißvorrichtung 10, die als wesentlichen Bestandteil neben einer stationär angeordneten Werkzeugeinrichtung 11 eine hier ebenfalls stationär angeordnete Kontaktheizeinrichtung 12 aufweist. Darüber hinaus weist die Stumpfschweißvorrichtung 10 zwei relativ zueinander und gegenüber der Werkzeugeinrichtung 11 sowie der Kontaktheizeinrichtung 12 in einem Arbeitsraum 13 bewegbare Greifeinrichtungen 14, 15 auf.

Die Werkzeugeinrichtung 11 ist als eine spanende Werkzeugeinrichtung ausgebildet und weist ein als Fingerfräser 16 ausgebildetes Werkzeug auf, das sich in einer definierten Werkzeugposition I innerhalb des Arbeitsraums 13 befindet. Die Kontaktheizeinrichtung 12 weist an zwei einander gegenüberliegenden Außenseiten jeweils eine Kontaktheizfläche 17, 18 auf und befindet sich benachbart zu der Werkzeugeinrichtung 11 in einer innerhalb des Arbeitsraums 13 definierten Heizungsposition II.

Die Greifeinrichtungen 14, 15 sind jeweils an einem Handgelenk 19 eines hier als 6-Achs-Roboter ausgebildeten Gelenkarmroboters 20, 51 angeschlossen und weisen jeweils eine Greiferachse 21 auf, die ein Öffnen und Schließen der Greifeinrichtung mittels Verschwenken eines Greifschenkels 22 gegen eine Greiferbasis 23 ermöglicht. Die Gelenkarmroboter 20, 25 ermöglichen innerhalb des Arbeitsraums 13 eine definierte Relativpositionierung der Greifeinrichtungen 14, 15 gegenüber der stationär angeordneten Werkzeugeinrichtung 11 und der ebenfalls stationär angeordneten Kontaktheizeinrichtung 12.

Wie **Fig. 1** weiter zeigt, befindet sich innerhalb des Arbeitsraumes 13 neben der Werkzeugeinrichtung 11 und der Kontaktheizeinrichtung 12 eine Magazineinrichtung 26, in der sich aus einem schweißbaren Kunststoffmaterial gefertigte Rohre 27, 28 in einer Bereitstellungsposition III befinden, aus der die Rohre 27, 28 mittels der Greifeinrichtung 14 entnommen und in eine in **Fig. 2** dargestellte Bearbeitungsausgangsposition IV überführt werden können.

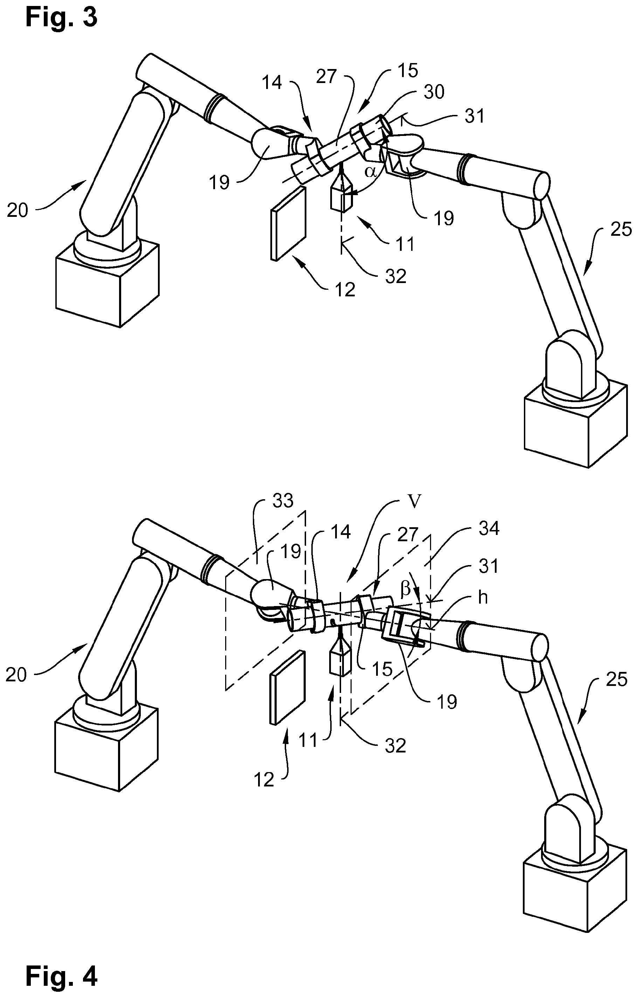

Wie **Fig. 2** zeigt, ist im vorliegenden Fall das Rohr 27 mittels der Greifeinrichtung 14 der Magazineinrichtung 26 entnommen und in die Bearbeitungsausgangsposition IV unmittelbar benachbart zur Werkzeugeinrichtung 11 überführt worden, wobei das Rohr 27 von der Greifeinrichtung 14 an einem Rohrende 29 erfasst wird, so dass nachfolgend, wie in **Fig. 3** dargestellt, das Rohr 27 von der gegenüberliegend der Greifeinrichtung 14 auf der anderen Seite einer durch die Anordnung der Werkzeugeinrichtung 11 und der Kontaktheizeinrichtung 12 definierten Bearbeitungsebene angeordneten Greifeinrichtung 15 an seinem zweiten Rohrende 30 erfasst und in die in **Fig. 3** dargestellte Bearbeitungsposition V überführt wird, in der das Rohr 27 mit seiner Längsachse 31 unter einem definierten Winkel α zur Werkzeugachse 32 der Werkzeugeinrichtung 11 angeordnet wird.

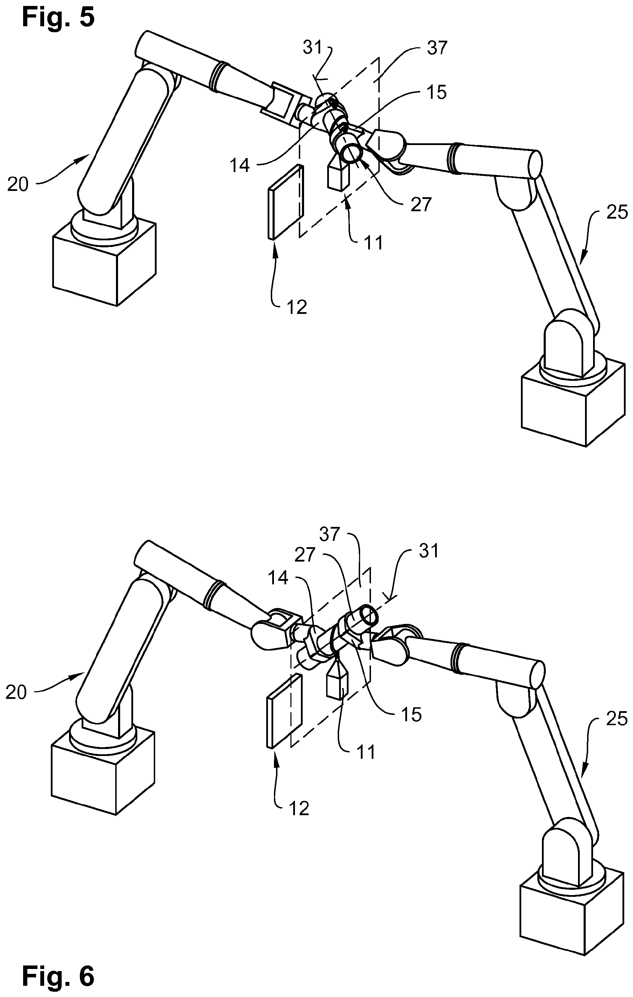

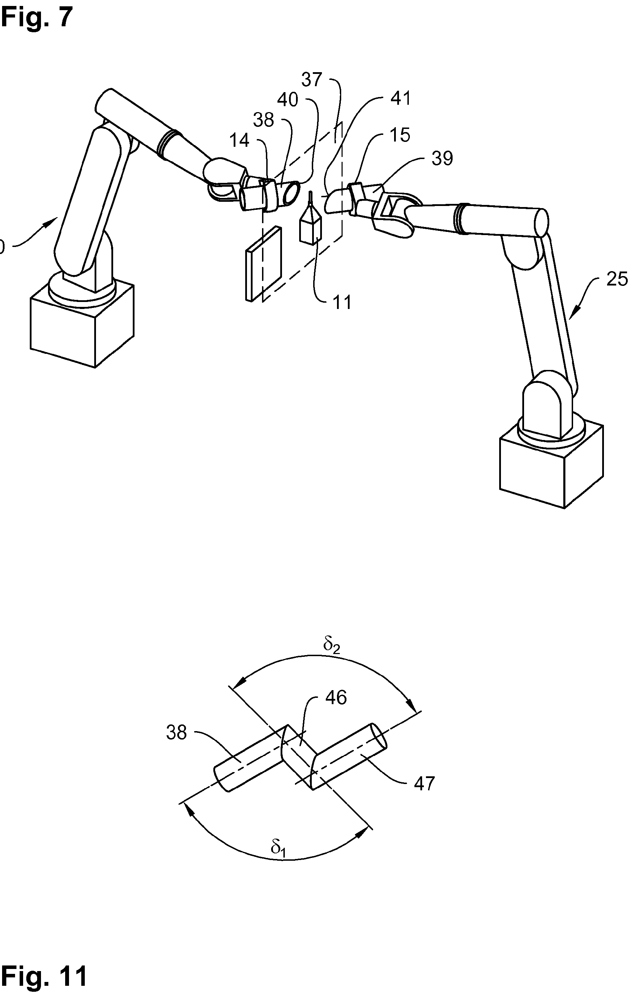

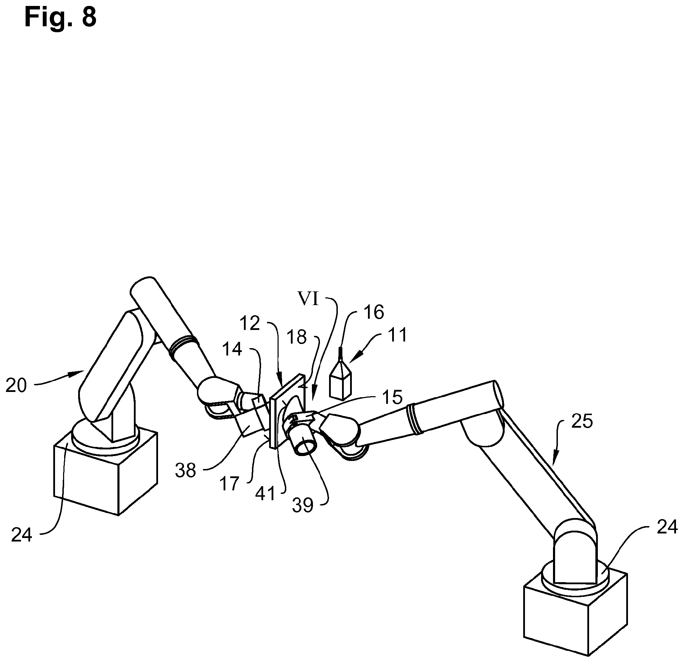

Wie aus einer Zusammenschau der **Fign. 4 bis 7** deutlich wird, erfolgt in der Bearbeitungsposition V des Rohrs 27 eine Drehung des Rohrs 27 um seine Längsachse 31, wobei die Längsachse 31 gleichzeitig eine Taumelbewegung um den Schnittpunkt der Werkzeugachse 32 mit der Horizontalen h ausführt mit einem zwischen der Horizontalen h und der Längsachse 31 ausgebideten Taumelwinkel β. Zur Ausführung dieser Taumelbewegung werden die Handgelenke 19 der Gelenkarmroboter 20, 25, an denen jeweils die Greifeinrichtungen 14, 15 angeordnet sind, in zueinander parallelen Bewegungsebenen 33, 34 auf einer Kreisbahn bewegt. Parallel zu den Bewegungsebenen 33, 34 ist zwischen diesen durch die Werkzeugachse 32 eine Trennebene 37 **(****Fig. 5****)** definiert, in der infolge der fortschreitenden Relativbewegung des Rohres 27 eine Trennung des Rohres 27 in zwei Rohrsegmente 38, 39 erfolgt **(****Fig. 7****),** so dass nachfolgend, wie in **Fig. 8** dargestellt, mittels der von den Gelenkarmrobotern 20, 25 durch den Arbeitsraum 13 bewegten Greifeinrichtungen 14, 15 die Rohrsegmente 38, 39 mit durch den Trennschnitt des Fingerfräsers 16 ausgebildeten Schweißkontaktflächen 40, 41 jeweils gegen eine Kontaktheizflächen 17, 18 positioniert werden können und ein Aufschmelzen der Schweißkontaktflächen 40, 41 in einer Aufheizposition VI erfolgen kann.

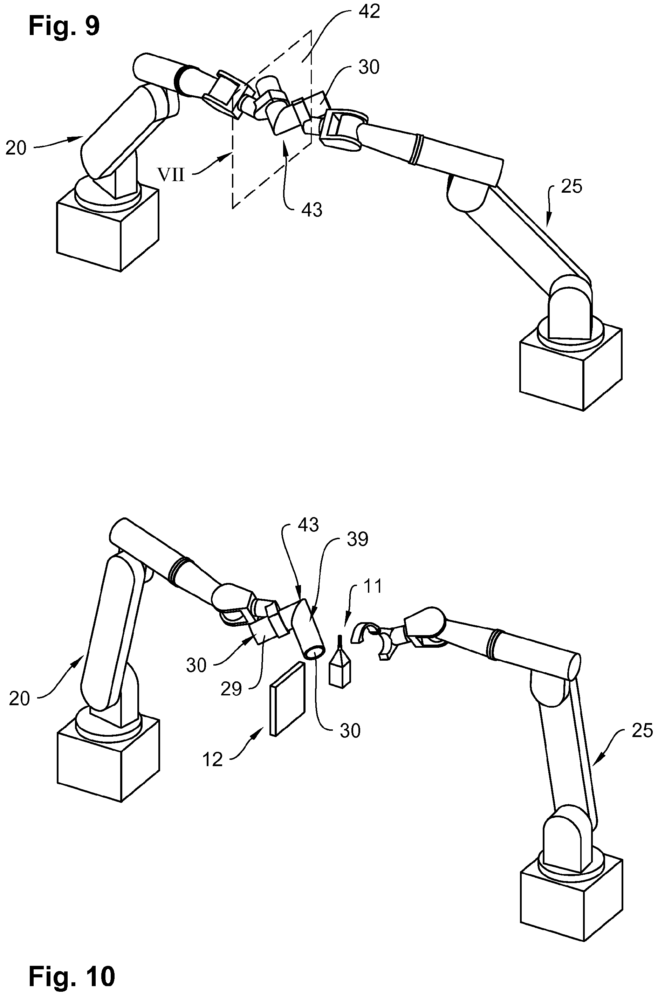

Anschließend werden die Rohrsegmente 38, 39 in eine in **Fig. 9** dargestellte, der Kontaktheizeinrichtung 16 benachbarte Fügeposition VII überführt, in der die Rohrsegmente gegenüber ihrer in **Fig. 6** am Ende der Ausführung des Trennschnitts dargestellten Relativanordnung um 180° verdreht zueinander mit den in einer Fügeebene 42 angeordneten Schweißkontaktflächen 40, 41 zur Ausbildung einer stoffschlüssigen Verbindung gegeneinander gedrückt werden und aus den Rohrsegmenten 38, 39 eine Rohrverbindung 43 hergestellt wird.

Nach Aushärten der stoffflüssigen Verbindung wird das von der Greifeinrichtung 15 erfasste zweite Rohrende 30 freigegeben, so dass, wie in **Fig. 10** dargestellt, die aus den Rohrsegmenten 38, 39 gebildete Rohrverbindung 43 von der mittels des Gelenkarmroboters 20 im Arbeitsraum 13 bewegten Greifeinrichtung 14 zu einer hier nicht näher dargestellten weiteren Magazineinrichtung zur Aufnahme von Rohrverbindungen 43 befördert werden kann.

Alternativ ist es auch möglich, dass die Greifeinrichtung 14 die fertiggestellte Rohrverbindung 43 erfasst hält oder ein Umgreifen erfolgt, derart, dass die Greifeinrichtung 14 nunmehr das von der Greifeinrichtung 15 freigegebene Rohrende 30 erfasst, und nachfolgend die Rohrverbindung 43 in eine erneute in **Fig. 2** dargestellte Bearbeitungsausgangsposition IV überführt wird, so dass von der zweiten Greifeinrichtung 15 analog der in **Fig. 3** dargestellten Verfahrensphase ein freies Rohrende 44 der Rohrverbindung 43 erfasst werden kann, um an einem durch das Rohrsegment 39 ausgebildeten Rohrschenkel 45 der Rohrverbindung 43 die vorstehend Bezug nehmend auf das Rohr 27 erläuterten Verfahrensschritte erneut auszuführen, so dass schließlich nach Ausführung eines weiteren Fügevorgangs ein in **Fig. 11** beispielhaft dargestellte, aus drei Rohrsegmenten 38, 46, 47 zusammengesetzte Rohrverbindung 48 herstellbar ist, wobei die Rohrsegmente 46 und 47 aus dem ursprünglichen Rohrsegment 39 gebildet sind.

Wie aus der vorstehende Erläuterung des Verfahrens deutlich wird, lassen sich somit komplexe Rohrverbindungen mit mehreren aufeinanderfolgend angeordneten Rohrsegmenten, die unter unterschiedlichen Rohrwinkeln δ₁, δ₂ miteinander verbunden sind, kontinuierlich herstellen.

## Patentansprüche

1. Verfahren zur Herstellung einer Stumpfschweißverbindung zwischen zwei jeweils von einer Greifeinrichtung (14, 15) aufgenommenen Rohrsegmenten (38, 39) eines Rohres (27, 28) aus einem schweißbaren Kunststoffmaterial, wobei zur Ausbildung von Schweißkontaktflächen (40, 41) Rohrendquerschnitte der Rohrsegmente (38, 39) mit einer Werkzeugeinrichtung (11) spanend bearbeitet werden, die Schweißkontaktflächen (40, 41) mittels einer Heizeinrichtung (12) aufgeschmolzen und nachfolgend die Schweißkontaktflächen (40, 41) zur Ausbildung einer die Rohrsegmente (38, 39) in einer Fügeebene (42) miteinander verbindenden Stumpfschweißnaht mit einem Fügedruck gegeneinander gepresst werden,
**dadurch gekennzeichnet,**
**dass** die Werkzeugeinrichtung (11) zur spanenden Bearbeitung der Schweißkontaktflächen (40, 41) in einer Trennebene (37) stationär angeordnet ist und ein Trennschnitt zur Ausbildung der Rohrsegmente (38, 39) mittels einer von den Greifeinrichtungen (14, 15) ausgeführten Relativbewegung des Rohres (27, 28) gegenüber der Werkzeugeinrichtung (11) in der Trennebene (37) ausgeführt wird, wobei der Trennschnitt gleichzeitig zur Ausbildung der Schweißkontaktflächen (40, 41) dient.

2. Verfahren nach Anspruch 1,
**dadurch gekennzeichnet,**
**dass** die Greifeinrichtungen (14, 15) zur Ausführung der Relativbewegung jeweils von einer Handhabungseinrichtung in einer zur Trennebene (37) parallelen Bewegungsebene (33, 34) auf einer kreisförmigen Bewegungsbahn geführt werden.

3. Verfahren nach Anspruch 1 oder 2,
**dadurch gekennzeichnet,**
**dass** das Rohr (27) vor Ausführung des Trennschnitts von einer Greifeinrichtung (14) an einem Rohrende (29) erfasst und aus einer Bereitstellungsposition III in eine der Werkzeugeinrichtung (11) benachbarte Bearbeitungsausgangsposition IV überführt wird, in der das zweite Rohrende (30) von der zweiten Greifeinrichtung (15) erfasst und das Rohr (27) von beiden Greifeinrichtungen (14, 15) zur Ausführung des Trennschnitts einem Schneidwerkzeug der Werkzeugeinrichtung (11) zugestellt wird.

4. Verfahren nach einem der vorangehenden Ansprüche,
**dadurch gekennzeichnet,**
**dass** nach Ausführung des Trennschnitts die Rohrsegmente (38, 39) mittels der Greifeinrichtungen (14, 15) mit ihren Schweißkontaktflächen (40, 41) jeweils gegen eine Heizfläche (17, 18) der zwischen den Schweißkontaktflächen (40, 41) angeordneten Heizeinrichtung (12) verfahren werden.

5. Verfahren nach einem der vorangehenden Ansprüche,
**dadurch gekennzeichnet,**
**dass** nach erfolgter Aufheizung der Schweißkontaktflächen (40, 41) die Schweißkontaktflächen (40, 41) einander gegenüberliegend und parallel zueinander angeordnet und durch eine von zumindest einer Greifeinrichtung (14, 15) ausgeführte Zustellbewegung zur Ausbildung einer stoffschlüssigen Verbindung in einer Fügeebene (42) gegeneinander verfahren werden.

6. Verfahren nach einem der vorangehenden Ansprüche,
**dadurch gekennzeichnet,**
**dass** die Aufheizung der Schweißkontaktflächen (40, 41) mittels einer stationär benachbart der Werkzeugeinrichtung (11) angeordneten Heizeinrichtung (12) und das Fügen der Rohrsegmente (38, 39) in einer zur Heizeinrichtung (12) benachbarten Fügeposition VII erfolgt.

7. Verfahren nach Anspruch 2 oder einem der Ansprüche 3 bis 6 in Verbindung mit Anspruch 2,
**dadurch gekennzeichnet,**
**dass** die spanende Bearbeitung der Rohrendquerschnitte zur Ausbildung der Schweißkontaktflächen (40, 41), die Aufheizung der Schweißkontaktflächen (40, 41) und das Fügen der Schweißkontaktflächen (40, 41) in einer gemeinsamen zwischen den Handhabungseinrichtungen angeordneten Bearbeitungsebene erfolgt.

8. Vorrichtung zur Herstellung einer Stumpfschweißverbindung zwischen zwei Rohrsegmenten (38, 39), umfassend Greifeinrichtungen (14, 15) zur Aufnahme von jeweils einem der miteinander zu verbindenden Rohrsegmente (38, 39), eine Werkzeugeinrichtung (11) zur Ausbildung von Schweißkontaktflächen (40, 41) durch spanende Bearbeitung von Rohrendquerschnitten der Rohrsegmente (38, 39) und eine Heizeinrichtung (12) zum Aufschmelzen der Schweißkontaktflächen (40, 41),
**dadurch gekennzeichnet,**
**dass** die Werkzeugeinrichtung (11) stationär angeordnet ist und die Greifeinrichtungen (14, 15) zur Handhabung der Rohrsegmente (38, 39) gegenüber der Werkzeugeinrichtung (11) unabhängig voneinander in Richtung der Raumachsen bewegbar sind.

9. Vorrichtung nach Anspruch 8,
**dadurch gekennzeichnet,**
**dass** die Heizeinrichtung (12) stationär und benachbart zur Werkzeugeinrichtung (11) angeordnet ist.

10. Vorrichtung nach Anspruch 8 oder 9,
**dadurch gekennzeichnet,**
**dass** die Greifeinrichtungen (14, 15) jeweils an einer mehrere Bewegungsachsen aufweisenden Handhabungseinrichtung angeordnet sind.

11. Vorrichtung nach Anspruch 10,
**dadurch gekennzeichnet,**
**dass** die Handhabungseinrichtungen als Roboter mit zumindest fünf Achsen ausgebildet sind.

12. Vorrichtung nach Anspruch 10 oder 11,
**dadurch gekennzeichnet,**
**dass** die Werkzeugeinrichtung (11) und die Heizeinrichtung (12) in einer gemeinsamen Bearbeitungsebene zwischen den jeweils stationär angeordneten Handhabungseinrichtungen angeordnet sind.

13. Vorrichtung nach einem der Ansprüche 8 bis 12,
**dadurch gekennzeichnet,**
**dass** die Heizeinrichtung als Kontaktheizeinrichtung ausgebildet ist.

14. Vorrichtung nach einem der Ansprüche 8 bis 12,
**dadurch gekennzeichnet,**
**dass** die Heizeinrichtung als Strahlungsheizeinrichtung ausgebildet ist.

## Claims

1. A method for producing a butt-welded joint between two pipe segments (38, 39) of a pipe (27, 28) made of a weldable plastic material, each pipe segment being held by a gripping means (14, 15), pipe end cross-sections of the pipe segments (38, 39) being machined with the aid of a tool means (11) for forming welding contact surfaces (40, 41), said welding contact surfaces (40, 41) being melted by means of a heating means (12) and in the following being pressed against each other with a joining pressure for forming a butt weld which connects the pipe segments (38, 39) with each other in a joining plane (42),
**characterised in that**
said tool means (11) is disposed in a stationary manner in a separating plane (37) for machining the welding contact surfaces (40, 41) and **in that** a separating cut for forming the pipe segments (38, 39) is realised by the gripping means (14, 15) moving the pipe (27, 28) relative to the tool means (11) in the separating plane (37), said separating cut simultaneously serving to form the welding contact surfaces (40, 41).

2. The method according to claim 1,
**characterised in that**
each gripping means (14, 15) is guided by a handling means on a circular movement path in a movement plane (33, 34) which is parallel to the separating plane (37) in order to perform the relative movement.

3. The method according to claim 1 or 2,
**characterised in that**
the pipe (27) is grasped at a pipe end (29) by a gripping means (14) before the separating cut is realised and is displaced from a supply position III into a starting position for processing IV adjacent to the tool means (11), the second pipe end (30) being grasped by the second gripping means (15) in said starting position for processing IV and both gripping means (14, 15) placing the pipe (27) at the disposal of a cutting tool of the tool means (11) for realising the separating cut.

4. The method according to any one of the preceding claims,
**characterised in that**
the gripping means (14, 15) move each of the pipe segments (38, 39) until their welding contact surfaces (40, 41) are in contact with a heating surface (17, 18) of the heating means (12), which is disposed between the welding contact surfaces (40, 41), after the separating cut has been realised.

5. The method according to any one of the preceding claims,
**characterised in that**
after the welding contact surfaces (40, 41) have been heated, the welding contact surfaces (40, 41) are arranged opposite each other and parallel to each other and are moved against each other by way of a supply movement which is performed by at least one gripping means (14, 15) and serves to form a material connection in a joining plane (42).

6. The method according to any one of the preceding claims,
**characterised in that**
the welding contact surfaces (40, 41) are heated up by means of a heating means (12) which is disposed adjacent to the tool means (11) in a stationary manner and **in that** the pipe segments (38, 39) are joined in a joining position VII adjacent to the heating means (12).

7. The method according to claim 2 or any one of the claims 3 to 6 in connection with claim 2,
**characterised in that**
machining of the pipe end cross-sections for forming the welding contact surfaces (40, 41), heating-up of the welding contact surfaces (40, 41) and joining of the welding contact surfaces (40, 41) take place in a common processing plane which is disposed between the handling means.

8. A device for producing a butt-welded joint between two pipe segments (38, 39), comprising gripping means (14, 15) for holding one of the pipe segments (38, 39) in each case which are to be connected, a tool means (11) for forming welding contact surfaces (40, 41) by machining pipe end cross-sections of the pipe segments (38, 39) and a heating means (12) for melting said welding contact surfaces (40, 41),
**characterised in that**
the tool means (11) is disposed in a stationary manner and **in that** the gripping means (14, 15) can be moved independently of each other in the direction of the spatial axes for handling the pipe segments (38, 39) relative to the tool means (11).

9. The device according to claim 8,
**characterised in that**
the heating means (12) is disposed in a stationary manner and adjacent to the tool means (11).

10. The device according to claim 8 or 9,
**characterised in that**
each of the gripping means (14, 15) is disposed at a handling means having multiple movement axes.

11. The device according to claim 10,
**characterised in that**
the handling means are embodied as robots having at least five axes.

12. The device according to claim 10 or 11,
**characterised in that**
the tool means (11) and the heating means (12) are disposed in a common processing plane between the handling means which are each disposed in a stationary manner.

13. The device according to any one of the claims 8 to 12,
**characterised in that**
the heating means is embodied as a contact heating appliance.

14. The device according to any one of the claims 8 to 12,
**characterised in that**
the heating means is embodied as a radiant heating appliance.

## Revendications

1. Procédé de fabrication d'un joint soudé bout à bout entre deux segments de tuyau (38, 39) d'un tuyau (27, 28) en matériau plastique soudable, chaque segment tuyau (38, 39) étant maintenu par un dispositif de préhension (14, 15), des sections transversales d'extrémité de tuyau des segments de tuyau (38, 39) étant usinées à l'aide d'un dispositif d'outillage (11) afin de former des surfaces de contact de soudage (40, 41), les surfaces de contact de soudage (40, 41) étant fondues au moyen d'un dispositif de chauffage (12) et étant ensuite pressées l'une contre l'autre à une pression de jonction afin de former une soudure bout à bout qui relie les segments de tuyau (38, 39) dans un plan de jonction (42),
**caractérisé en ce que**
le dispositif d'outillage (11) est disposé de maniéré stationnaire dans un plan de plan de séparation (37) pour l'usinage des surfaces de contact de soudage (40, 41) et **en ce qu'**une coupe de séparation pour former les segments de tuyau (38, 39) est exécutée dans le plan de séparation (37) par un mouvement relatif du tuyau (27, 28) effectué par les dispositifs de préhension (14, 15) par rapport au dispositif d'outillage (11), la coupe de séparation servant simultanément à former les surfaces de contact de soudage (40, 41).

2. Procédé selon la revendication 1,
**caractérisé en ce que**
des dispositifs de manutention respectifs guident les dispositifs de préhension (14, 15) sur un trajet circulaire dans un plan de mouvement (33, 34) qui est parallèle au plan de séparation (37) afin d'effectuer le mouvement relatif.

3. Procédé selon la revendication 1 ou 2,
**caractérisé en ce**
**qu'**un dispositif de préhension (14) agrippe le tuyau (27) à une extrémité de tuyau (29) avant que la coupe de séparation soit exécutée et transfère le tuyau (27) d'une position de fournissement III à une position de commencement de traitement IV adjacente au dispositif d'outillage (11), dans laquelle le deuxième dispositif de préhension (15) agrippe la deuxième extrémité de tuyau (30) et les deux dispositifs de préhension (14, 15) approchent le tuyau (27) d'un outil de coupe du dispositif d'outillage (11) pour l'exécution de la coupe de séparation.

4. Procédé selon l'une quelconque des revendications précédentes,
**caractérisé en ce**
**qu'**après l'exécution de la coupe de séparation, les dispositifs de préhension (14, 15) déplacent les segments de tuyau (38, 39) jusqu'à ce que leurs surfaces de contact de soudage (40, 41) viennent chacune en contact avec une surface de chauffage (17, 18) du dispositif de chauffage (12), qui est disposé entre les surfaces de contact de soudage (40, 41).

5. Procédé selon l'une quelconque des revendications précédentes,
**caractérisé en ce**
**qu'**après le chauffage des surfaces de contact de soudage (40, 41), les surfaces de contact de soudage (40, 41) sont disposées l'une face à l'autre et parallèlement l'une à l'autre et sont déplacées l'une contre l'autre par un mouvement d'approche effectuée par au moins un dispositif de préhension (14, 15) afin de former une liaison par matière dans un plan de jonction (42).

6. Procédé selon l'une quelconque des revendications précédentes,
**caractérisé en ce que**
les surfaces de contact de soudage (40, 41) sont chauffées au moyen d'un dispositif de chauffage (12) disposé de manière stationnaire à côté du dispositif d'outillage (11) et les segments de tuyau (38, 39) sont joints dans une position de jonction VII adjacente au dispositif de chauffage (12).

7. Procédé selon la revendication 2 ou l'une quelconque des revendications 3 à 6 conjointement avec la revendication 2,
**caractérisé en ce que**
l'usinage des sections transversales d'extrémité de tuyau pour former les surfaces de contact de soudage (40, 41), le chauffage des surfaces de contact de soudage (40, 41) et la jonction des surfaces de contact de soudage (40, 41) s'effectuent dans un plan de traitement commun qui est disposé entre les dispositifs de manutention.

8. Dispositif de fabrication d'un joint soudé bout à bout entre deux segments de tuyau (38, 39), le dispositif comprenant des dispositifs de préhension (14, 15) servant chacun pour maintenir un des segments de tuyau (38, 39) à relier, un dispositif d'outillage (11) servant à former des surfaces de contact de soudage (40, 41) en usinant des sections transversales d'extrémité de tuyau des segments de tuyau (38, 39) et un dispositif de chauffage (12) pour fondre les surfaces de contact de soudage (40, 41),
**caractérisé en ce que**
le dispositif d'outillage (11) est disposé de manière stationnaire et les dispositifs de préhension (14, 15) peuvent être déplacés indépendamment l'un de l'autre dans la direction des axes spatiaux par rapport au dispositif d'outillage (11) afin de manier les segments de tuyau (38, 39).

9. Dispositif selon la revendication 8,
**caractérisé en ce que**
le dispositif de chauffage (12) est disposé de manière stationnaire et à côté du dispositif d'outillage (11).

10. Dispositif selon la revendication 8 ou 9,
**caractérisé en ce que**
les dispositifs de préhension (14, 15) sont disposés chacun sur un dispositif de manutention ayant plusieurs axes de mouvement.

11. Dispositif selon la revendication 10,
**caractérisé en ce que**
les dispositifs de manutention sont réalisés comme robots ayant au moins cinq axes.

12. Dispositif selon la revendication 10 ou 11,
**caractérisé en ce que**
le dispositif d'outillage (11) et le dispositif de chauffage (12) sont disposés dans un plan de traitement commun entre les dispositifs de manutention, qui sont disposés chacun de manière stationnaire.

13. Dispositif selon l'une quelconque des revendications 8 à 12,
**caractérisé en ce que**
le dispositif de chauffage est réalisé comme dispositif de chauffage à contact.

14. Dispositif selon l'une quelconque des revendications 8 à 12,
**caractérisé en ce que**
le dispositif de chauffage est réalisé comme dispositif de chauffage radiant.
